(19)

Europäisches
Patentamt
European
Patent Office
Office européen
des brevets

(11) **EP 3 109 809 A1**

(12) **EUROPÄISCHE PATENTANMELDUNG**

(43) Veröffentlichungstag:
**28.12.2016 Patentblatt 2016/52**

(51) Int Cl.:
***G06Q 10/06*** *(2012.01)*

(21) Anmeldenummer: **16169368.4**

(22) Anmeldetag: **12.05.2016**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(30) Priorität: **23.06.2015 DE 102015211596**

(71) Anmelder: **Siemens Aktiengesellschaft
80333 München (DE)**

(72) Erfinder:
- **Creutznacher, Thomas
 91052 Erlangen (DE)**
- **Lamparter, Steffen
 85622 Feldkirchen (DE)**
- **Lepratti, Raffaello
 16167 Genua (IT)**

(54) **VERFAHREN ZUM HERSTELLEN EINES PRODUKTS UND EIN AUTOMATISIERUNGSSYSTEM**

(57) Es wird ein Verfahren zum Herstellen eines Produkts unter Verwendung mindestens eines von mehreren Produktionsmodulen vorgeschlagen. Das Verfahren umfasst folgende Schritte:
- Ermitteln von mehreren Produktionsvarianten zum Herstellen des Produkts unter Verwendung von mindestens einem Produktionsmodul der mehreren Produktionsmodulen, wobei jede der mehreren Produktionsvarianten das Betreiben mindestens eines Produktionsmoduls der mehreren Produktionsmodule umfasst, und das mindestens eine Produktionsmodul der jeweiligen Produktionsvariante zugeordnet wird;
- Zuweisen von mehreren Produktionskenngrößen zu jeder der Produktionsvarianten in Abhängigkeit von einer jeweiligen Leistungsaufnahme des mindestens einen Produktionsmoduls, welches der Produktionsvariante zugeordnet ist;
- Berechnen einer Kennzahl für jede der mehreren Produktionsvarianten in Abhängigkeit von den Produktionskenngrößen; und
- Auswählen einer Produktionsvariante zum Herstellen des Produkts aus den mehreren Produktionsvarianten in Abhängigkeit von der berechneten Kennzahl.

Des Weiteren wird ein Automatisierungssystem mit mehreren Produktionsmodulen vorgeschlagen, das ein solches Verfahren ausführen kann.

FIG 1

EP 3 109 809 A1

**Beschreibung**

Die vorliegende Erfindung betrifft ein Verfahren zum Herstellen eines Produkts unter Verwendung mindestens eines von mehreren Produktionsmodulen und ein Automatisierungssystem, insbesondere ein Herstellungssystem für ein Produkt.

Die Komplexität von Herstellungsprozessen sowie zunehmend unvorhersehbare Marktentwicklungen fordern eine dynamische und schnelle Anpassungsfähigkeit von Herstellungssystemen. Die Kapazität eines Herstellungssystems kann von einer Vielzahl von komplexen und dynamischen, inneren wie äußeren Faktoren beeinflusst werden. Daher ist eine effektive, effiziente und zeitnahe Reaktion auf sowohl vorhersehbare als auch unvorhersehbare Ereignisse und Einflüsse, welche das Herstellungssystem betreffen, wünschenswert. Die Herausforderung besteht darin, die erforderlichen Maßnahmen zu erkennen und möglichst schnell und mit möglichst wenig Aufwand und Verlusten umzusetzen. Wandelbare Produktionskapazitäten (transformable production capacities) bieten hierfür ein anschauliches Beispiel.

Angestrebt wird eine Ausschöpfung von Produktionskapazitäten eines Herstellungssystems. Unvorhersehbare oder unbeständige Nutzung vorhandener Produktionskapazitäten eines Herstellungssystems kann die Produktivität des Herstellungssystems verringern und bedarf oftmals Gegenmaßnahmen zur angepassten Kapazitätskontrolle. Schlechte Kapazitätsausnutzung und Störungen im Materialfluss sind mit wirtschaftlichen Verlusten verbunden, wohingegen ein ständig überlastetes Herstellungssystem erweitert werden sollte.

Die Optimierung und Anpassung der Produktionskapazität des Herstellungssystems an die tatsächlich erforderliche Kapazität setzt die Auswertung und den Vergleich von unterschiedlichen Produktionsvarianten eines Herstellungssystems voraus. Diese sind jedoch mit einem hohen Maß an Entwicklungs- und technischem Aufwand verbunden.

Eine nachhaltige Verwertung von Ressourcen, Arbeitsaufwand und Energie hat zunehmend an Bedeutung gewonnen. Ein hoher Energieverbrauch tritt beispielsweise in automatisierten Bereichen der Automobilindustrie auf, in welcher eine hohe Anzahl von Robotern eingesetzt werden. Nicht zuletzt aufgrund hoher Energiepreise findet der Stromverbrauch bei der Produktionsplanung erhöhte Beachtung. Hierbei gilt der unnötige Stromverbrauch zu reduzieren.

Eine komplexe Auswertung von unterschiedlichen Produktionsfaktoren sollte innerhalb der Produktionsplanung stattfinden. Die so genannte Overall Equipment Effectiveness (OEE) gibt die gesamte Effektivität des Produktionssystems an, die sich aus Verfügbarkeit, Leistung und Qualität zusammensetzt. Energieverbrauch und Energiekosten werden dabei nicht berücksichtigt.

Die DE 10 2013 216 799 A1 beschreibt ein einzelnes Herstellungssystems, aus einer Mehrzahl von Untersystemen mit jeweils zumindest einem Modul. Es wird dabei eine Mehrzahl von durchschnittlichen Energiebedarfsmengen jedes Untersystems, die Betriebszuständen der Module entsprechen, ermittelt. Es werden dann geeignete Betriebszustände ausgewählt. Vor diesem Hintergrund besteht eine Aufgabe der vorliegenden Erfindung darin, ein verbessertes Verfahren zum Herstellen eines Produkts unter Verwendung mindestens eines von mehreren Produktionsmodulen zu schaffen.

Demgemäß wird ein Verfahren zum Herstellen eines Produkts unter Verwendung mindestens eines von mehreren Produktionsmodulen vorgeschlagen. Das Verfahren weist folgende Schritte auf:

- Ermitteln von mehreren Produktionsvarianten zum Herstellen des Produkts unter Verwendung von mindestens einem Produktionsmodul der mehreren Produktionsmodule, wobei jede der mehreren Produktionsvarianten das Betreiben des mindestens einen Produktionsmoduls umfasst, und das mindestens eine Produktionsmodul der jeweiligen Produktionsvariante zugeordnet wird;
- Zuweisen von mehreren Produktionskenngrößen zu jeder der Produktionsvarianten in Abhängigkeit von einer jeweiligen Leistungsaufnahme des mindestens einen zugeordneten Produktionsmoduls;
- Berechnen einer Kennzahl für jede der mehreren Produktionsvarianten in Abhängigkeit von den Produktionskenngrößen;
- Auswählen einer Produktionsvariante zum Herstellen des Produkts aus den mehreren Produktionsvarianten in Abhängigkeit von der berechneten Kennzahl, und
- Herstellen des Produkts gemäß der ausgewählten Produktionsvariante, indem das mindestens eine zugeordnete Produktionsmodul der ausgewählten Produktionsvariante für die Herstellung des Produkts bereitgestellt und in einer durch die ausgewählte Produktionsvariante definierten Weise betrieben wird.

Das Verfahren betrifft ferner das Herstellen eines Herstellungssystems eines Produkts. Optional betrifft das Verfahren das Umbauen eines vorhandenen Herstellungssystems eines Produkts.

Das vorgeschlagene Verfahren ist geeignet, eine bestehende Produktionsanlage, welche mehrere Produktionsmodule zum Herstellen eines Produkts aufweist, für die Herstellung eines Produkts zu betreiben oder eine noch nicht existierende Produktionsanlage mit mehreren Produktionsmodulen zur Herstellung eines Produkts zu planen/gestalten. Ferner kann das Verfahren für eine Umstrukturierung, einen Umbau und/oder eine Umgestaltung einer Produktionsanlage zum Herstellen eines Produkts ausgeführt werden. Insbesondere handelt es sich bei der Produktionsanlage um eine automatisierte Produktionsanlage (d.h. ein Automatisierungssystem) mit mehreren automatisierten Produktionsmodulen, die keinen oder lediglich einen reduzierten menschlichen Eingriff erfordert, d.h. die die zur Herstellung nötigen Aktionen und Operationen zumindest teilweise selbst ausführt.

Im Folgenden sind die Termini Herstellung und Produktion gleichbedeutend und beliebig austauschbar. Ferner werden die Begriffe Energieverbrauch und verbrauchte Energiemenge jeweils gleichbedeutend mit Energiebedarf und nötige/erforderliche Energiemenge benutzt.

Bei dem Produkt handelt es sich insbesondere um Geräte, Maschinen und/oder Elemente oder Teile davon. Beispielsweise kann das Produkt sich auf ein Fahrzeug, Werkzeug, Landmaschine, Elektrogerät, Haushaltsgerät, Messgerät, Baugerät, Apparat, Waffe, elektronisches Bauteil etc. beziehen. Ferner kann das Produkt ein Gerät mit durch ein Antriebssystem bewegten Teilen sein, wobei das Antriebssystem Teil des Gerätes oder ein externes Antriebssystem sein kann. Zwei noch konkretere Beispiele für ein Produkt sind eine Autokarosserie oder eine Leiterplatte eines elektronischen Gerätes, z.B. einer Digitalkamera oder eines Mobiltelefons.

Die mehreren Produktionsmodule sind insbesondere Maschinen, Geräte und/oder sonstige Einheiten, die zur Herstellung des Produkts eingesetzt werden können. Vorzugsweise sind die Produktionsmodule automatisiert, d.h. ihr Betrieb benötigt kein oder ein reduziertes menschliches Zutun. So sind die Produktionsmodule vorzugsweise von dem Hersteller oder Benutzer vorprogrammiert, eine oder mehrere Aktionen durchzuführen, welche die Bearbeitung, Verarbeitung und/oder den Transport von Material, Werkstoff, Werkzeug und/oder Produkt betreffen können. Beispiele für die Aktionen der Produktionsmodule umfassen Schweißen, Löten, Pressen, Schneiden, Erhitzen/Erwärmen, Abkühlen, Translatieren, Rotieren, Transportieren, Färben, Kleben, Bohren, Schrauben, Ätzen, Reinigen, etc. Ferner können die Produktionsmodule indirekt an der Herstellung des Produkts beteiligt sein und z.B. Umgebungsparameter wie die Temperatur und den Druck bei der Herstellung des Produkts verändern oder mindestens ein anderes Produktionsmodul mit Strom/Spannung versorgen.

Beispiele für Produktionsmodule sind Schweißgeräte, Lötmaschinen, Pressen, Sägen, Hitzekanonen, Heißluftgebläse, Wärmetauscher, Druckkammern, Fließbänder, Lampen, Roboterarme, Bohrer und/oder eine Kombination davon. Insbesondere sind die Produktionsmodule automatisiert und Teil eines Automatisierungssystems. Vorzugsweise sind die Produktionsmodule elektrisch und/oder physisch miteinander verkoppelt oder zumindest verkoppelbar.

Produktionskenngrößen können Parameter, Variablen, Indikatoren, (Einfluss-)Faktoren, System-, Betriebs-, Mess- und/oder Kenngrößen sein, die den Herstellungsprozess des Produkts beeinflussen und/oder charakterisieren. Beispielsweise beziehen sich die Produktionskenngrößen auf eine Verfügbarkeit, eine Leistungsfähigkeit, eine Produktionsqualität und/oder einen Durchsatz der jeweiligen Produktionsvariante. Die Produktionskenngrößen sowie ihre Berechnung können von dem Betreiber der Produktionsanlage und/oder dem Hersteller der Produktionsmodule bereitgestellt/definiert sein. Insbesondere können die Produktionskenngrößen während der Herstellung des Produkts bestimmt und/oder modifiziert werden, um beispielsweise den Marktentwicklungen zu entsprechen oder auf äußere wie innere Einflüsse zu reagieren.

Die Leistungsaufnahme des Produktionsmoduls bezieht sich auf den Bedarf des Produktionsmoduls an elektrischer Energie pro Zeiteinheit und kann einem Stromverbrauch oder Strombedarf pro Zeiteinheit gleichgesetzt werden. Die Leistungsaufnahme kann von einer mechanischen Arbeit, einer chemischen Aktion, einer Heiz- oder Kühlleistung, Evakuierung, Kompression, Expansion, elektrische Transformation, Pneumatik und/oder Hydraulik des Produktionsmoduls während des Betriebs abhängig sein. Ferner kann die Leistungsaufnahme vom Alter und Zustand sowie einer Betriebsbelastung (z.B. Überlastung, Überhitzung) des Produktionsmoduls abhängen. Die Leistungsaufnahme kann sich auf den Strombedarf pro Zeiteinheit sowohl im Betrieb des Produktionsmoduls als auch im Leerlauf des Produktionsmoduls, d.h. das Produktionsmodul ist in Bereitschaft und beteiligt sich nicht aktiv an der Herstellung des Produkts, beziehen.

Die Leistungsaufnahme der zugeordneten Produktionsmodule bestimmt mindestens eine der Produktionskenngrößen jeder der mehreren Produktionsvarianten. Das Zuweisen der Produktionskenngrößen kann insbesondere ein Erfassen/Messen der Produktionskenngrößen jedes der Produktionsmodule umfassen. Alternativ oder zusätzlich können die Produktionskenngrößen vom Hersteller der Produktionsanlage angegeben und/oder auf einer Datenbank gespeichert und abrufbar sein. Dementsprechend kann das Zuweisen der Produktionskenngrößen ein Abrufen auf der Datenbank umfassen.

Insbesondere können die Produktionskenngrößen aktuell (d.h. vom Betreiber der Produktionsanlage eingestellt), real (d.h. gemessen) oder simuliert (d.h. auf der Basis von vorhandenen Daten berechnet) sein. Die Produktionskenngrößen können von diversen inneren und äußeren Faktoren beeinflusst werden. So kann beispielsweise eine Betriebsstörung des Produktionsmoduls seine Verfügbarkeit, Produktionsqualität und seinen Durchsatz reduzieren. Häufige Wartungsarbeiten, z.B. bedingt durch ein hohes Alter des Produktionsmoduls, können die Verfügbarkeit und den Durchsatz verringern. Eine Überhitzung eines der zugeordneten Produktionsmodule kann eine Energieeffizienz der Produktionsvariante verringern und somit ihren Energieverbrauch erhöhen. Eine ineffektive Kühlung, eine ineffiziente elektrische Schaltung, unnötige Zwischenelemente usw. können die Leistungsaufnahme des Produktionsmoduls erhöhen.

Generell können mehr Produktionsmodule zur Verfügung stehen als zur Herstellung des Produkts nötig sind. Dementsprechend können mehrere verschiedene Kombinationsmöglichkeiten der Produktionsmodule gegeben sein, die zum Herstellen des Produkts geeignet sind. Eine Produktionsvariante bezieht sich dabei jeweils auf eine dieser Kombinationsmöglichkeiten der zur Verfügung stehenden Produktionsmodule zum Herstellen des Produkts und gibt an, wie die der Produktionsvariante zugeordneten Produktionsmodule zu betreiben sind. Vorzugsweise gibt die Produktionsvariante eine Betriebsweise der zugeordneten Produktionsmodule, für die Herstellung relevante Betriebsparameter inklusive Arbeits- und Einsatzzeiten der zugeordneten Produktionsmodule sowie die Verknüpfung der zugeordneten Produktionsmodule miteinander vor. Ferner kann die Produktionsvariante eine Herstellungszeit des Produkts angeben. Insbesondere beinhaltet die Produktionsvariante eine Reihenfolge und Zusammensetzung mindestens einer Teilmenge der verfügbaren Produktionsmodule. Dies betrifft auch den Fall, dass ein einziges Produktionsmodul zum Herstellen des Produkts erforderlich ist.

Da die Produktionskenngrößen in Abhängigkeit von der Leistungsaufnahme der zugeordneten Produktionsmodule bestimmt werden, kann jede der Produktionsvarianten ebenfalls eine Leistungsaufnahme und ein Energieverbrauch zugewiesen werden.

Vorzugsweise erfasst eine Recheneinheit die Produktionskenngrößen der mehreren Produktionsvarianten. Es ist möglich, dass eine einzige Produktionsvariante ermittelt wird. Für den Fall, dass keine Produktionsvarianten ermittelt werden können, können die Bedingungen für das Ermitteln von Produktionsvarianten geändert werden und es kann erneut versucht werden, geeignete Produktionsvarianten zu ermitteln. Beispielsweise können die Produktionskenngrößen erneut zugewiesen (z.B. gemessen) oder Auswahlkriterien für die Produktionsvarianten (z.B. Gewichtung oder Grenzwerte der Produktionskenngrößen) verändert werden.

Die Kennzahl wird in Abhängigkeit von mindestens einem Teil der Produktionskenngrößen der jeweiligen Produktionsvariante berechnet. Dabei können die Produktionskenngrößen normiert und/oder gewichtet werden. Ferner können zwei oder mehr Produktionskenngrößen über eine oder mehrere mathematische Operationen, z.B. Addition oder Multiplikation, miteinander verknüpft sein, woraus sich die Kennzahl ergibt.

Auf der Basis der berechneten Kennzahlen wird eine Produktionsvariante von den ermittelten Produktionsvarianten zum Herstellen des Produkts ausgewählt. Insbesondere können die Produktionsvarianten miteinander verglichen werden, indem die zugewiesenen Kennzahlen miteinander verglichen werden. Basierend auf diesem Vergleich kann die am besten geeignete Produktionsvariante, z.B. mit der größten Kennzahl (oder kleinsten, abhängig davon, wie die Kennzahl berechnet wird), ausgewählt werden.

Gemäß einer Ausführungsform umfasst das Verfahren ferner die Schritte:

- Erfassen der Leistungsaufnahme jedes der mehreren Produktionsmodule;
- Berechnen eines Integrals über die Leistungsaufnahme jedes der mehreren Produktionsmodule in einem vorgegebenen Zeitintervall;
- Berechnen eines Energieverbrauchs jeder der Produktionsvarianten als eine Summe der Integrale der Leistungsaufnahmen der zugeordneten Produktionsmodule; und
- Berechnen einer Produktionsenergiemenge als ein Quotient des Energieverbrauchs durch einen Durchsatz der jeweiligen Produktionsvariante, wobei der Durchsatz eine Stückzahl des hergestellten Produkts pro Zeiteinheit ist.

Die Kennzahl jeder der mehreren Produktionsvarianten ist von der zugewiesenen Produktionsenergiemenge abhängig.

Auf diese Weise hängt die Kennzahl der Produktionsvariante von den Leistungsaufnahmen der zugeordneten Produktionsmodule ab.

Die Leistungsaufnahme kann erfasst werden, indem die aktuelle (oder reale) Leistungsaufnahme gemessen wird oder eine (z.B. auf einer Datenbank) gespeicherte Leistungsaufnahme abgerufen wird. Die Leistungsaufnahme kann zeitabhängig oder statisch sein. Ferner kann eine Energie- oder Leistungsmesseinheit vorgesehen sein, die die Leistungsaufnahme oder den Energieverbrauch des Produktionsmoduls misst.

Es wird über die Leistungsaufnahme in einem Zeitintervall integriert, das von dem Betreiber/Hersteller vorgegeben sein kann. Daraus ergibt sich das Integral der Leistungsaufnahme. Das Zeitintervall ist beispielsweise ein Jahr, ein Monat, ein Tag oder eine Stunde. Das Integral entspricht beispielsweise einem simulierten Energieverbrauch des jeweiligen Produktionsmoduls, i.e. einer Energiemenge, die von dem Produktionsmodul innerhalb des Zeitintervalls verbraucht werden würde.

Die Integrale der der Produktionsvariante zugeordneten Produktionsmodule werden aufaddiert, woraus sich der Energieverbrauch der jeweiligen Produktionsvariante ergibt. Der Energieverbrauch entspricht beispielsweise einer simulierten Energiemenge, die die Produktionsvariante innerhalb des vorgegebenen Zeitintervalls verbrauchen würde.

Der Energieverbrauch der Produktionsvariante wird durch den Durchsatz derselben dividiert, woraus sich die Produktionsenergiemenge der Produktionsvariante ergibt. Der Durchsatz gibt vorzugsweise an, wie viele Stücke des Produkts innerhalb einer vorgegebenen Zeitdauer hergestellt werden oder hergestellt werden können. Beispielsweise entspricht die Produktionsenergiemenge einer Produktionsvariante einem Energieverbrauch, der bei Nutzung dieser Produktionsvariante innerhalb des Zeitintervalls und pro hergestelltes Produkt zu erwarten wäre.

Gemäß einer weiteren Ausführungsform umfasst das Verfahren ferner die Schritte:

- Vergleichen der Produktionsenergiemengen der mehreren Produktionsvarianten miteinander;
- Bestimmen einer maximalen Produktionsenergiemenge der mehreren Produktionsvarianten; und
- Berechnen einer normierten Produktionsenergiemenge als ein Quotient der Produktionsenergiemenge durch die maximale Produktionsenergiemenge.

Die Kennzahl jeder der mehreren Produktionsvarianten hängt von der normierten Produktionsenergiemenge ab.

Vorzugsweise ist die Kennzahl auf 1 normiert, d.h. die Kennzahl kann einen Wert zwischen 0 und 1,0 annehmen. Die Produktionsenergiemenge wird durch eine größtmögliche Produktionsenergiemenge dividiert, woraus sich die normierte Produktionsenergiemenge ergibt. Folglich kann die normierte Produktionsenergiemenge einen Wert zwischen 0 und 1,0 annehmen.

Gemäß einer weiteren Ausführungsform umfassen die Produktionskenngrößen jeder der mehreren Produktionsvarianten einen Energieverbrauch der jeweiligen Produktionsvariante.

Gemäß einer weiteren Ausführungsform ist mindestens eine der Produktionskenngrößen jeder der mehreren Produktionsvarianten eine zeitabhängige Produktionskenngröße, d.h. zeitlich veränderlich. Dadurch ist die Kennzahl der Produktionsvarianten ebenfalls zeitlich veränderlich.

Dynamische, insbesondere unerwartete, Faktoren und/oder Einflüsse auf die Produktionsmodule, die die Herstellung des Produkts betreffen, können dadurch zeitnah berücksichtigt werden. Eine zeitlich veränderliche Kennzahl erlaubt eine dynamische Anpassung der Herstellung an diese Faktoren und/oder Einflüsse.

Gemäß einer weiteren Ausführungsform ist die Leistungsaufnahme mindestens eines Teils der mehreren Produktionsmodule zeitlich veränderlich. Die Kennzahl mindestens eines Teils der Produktionsvarianten ist abhängig von der zeitlich veränderlichen Leistungsaufnahme der zugeordneten Produktionsmodule und dadurch zeitlich veränderlich.

Insbesondere kann die Leistungsaufnahme der Produktionsmodule zeitabhängig bestimmt/erfasst werden. Beim Berechnen der Kennzahl kann die Zeitabhängigkeit der Leistungsaufnahme berücksichtigt werden, woraus sich eine zeitabhängige Kennzahl für die Produktionsvarianten ergibt. Dadurch kann eine dynamische Bestimmung der Produktionsvarianten, die zum Herstellen des Produkts geeignet sind, ermöglicht werden.

Gemäß einer weiteren Ausführungsform umfassen die Produktionskenngrößen eine Verfügbarkeit, eine Leistungsfähigkeit, eine Produktionsqualität und/oder einen Durchsatz der jeweiligen Produktionsvariante.

Vorzugsweise werden die Produktionskenngrößen gemäß einem einheitlichen Modell, z.B. der Norm ISO/WD 22400-2, beschrieben.

Die Verfügbarkeit kann angeben, inwiefern eine verfügbare Kapazität der Produktionsmodule, welche zu der Produktionsvariante zugeordnet sind, zum Herstellen des Produkts beansprucht ist. Insbesondere kann die Verfügbarkeit durch eine Division einer tatsächlichen Produktionszeit durch eine geplante Belegungszeit berechnet werden.

Die Leistungsfähigkeit kann Auskunft über eine Effektivität der Produktionsvariante während der Produktionsdauer geben. Insbesondere wird die Leistungsfähigkeit berechnet, indem eine geplante Laufzeit pro Einheit mit einer hergestellten Menge multipliziert und durch eine tatsächliche Produktionszeit dividiert wird.

Die Produktionsqualität kann Auskunft über die Qualität des gemäß der Produktionsvariante hergestellten Produkts geben. Insbesondere wird die Produktionsqualität ermittelt, indem eine Menge des Produkts, das vorgegebenen Qualitätserfordernissen genügt, durch eine Gesamtmenge des hergestellten Produkts dividiert wird.

Der Durchsatz kann eine Kenngröße für die Effizienz der Herstellung des Produkts gemäß der Produktionsvariante darstellen. Insbesondere ergibt sich der Durchsatz aus einer Division einer Menge des hergestellten Produkts durch eine tatsächliche Betriebsdauer der Produktionsanlage.

Gemäß einer weiteren Ausführungsform unterscheiden sich die mehreren Produktionsvarianten in einer Produktionszeit, Arbeitszeit, Reihenfolge, Zusammensetzung und/oder einem Betriebsparameter der zugeordneten Produktionsmodule sowie einer Produktionszeit des Produkts.

Gemäß einer weiteren Ausführungsform umfasst das Verfahren ferner die Schritte:

- Vergleichen der Kennzahlen der mehreren Produktionsvarianten miteinander; und
- Auswählen der Produktionsvariante mit der größten Kennzahl.

Insbesondere kann, nachdem eine der mehreren Produktionsvarianten ausgewählt wird, die ausgewählte Produktionsvariante mit Produktionsvarianten, welche auf einer Datenbank (z.B. der Produktionsanlage, des Herstellers, etc.) gespeichert sind, verglichen werden. Ferner kann die ausgewählte Produktionsvariante mit der aktuellen Produktionsvariante der Produktionsanlage verglichen werden. Dabei werden vorzugsweise die Kennzahlen dieser Produktionsvarianten miteinander verglichen.

Gemäß einer weiteren Ausführungsform umfasst das Verfahren ferner, falls die Produktionskenngrößen der mehreren Produktionsvarianten nicht in einem vorgegebenen Kenngrößenbereich liegen:

- Zuweisen von veränderten Produktionskenngrößen zu den mehreren Produktionsvarianten;
- Ermitteln von weiteren Produktionsvarianten; und/oder
- Ändern des vorgegebenen Kennzahlbereichs.

Ferner kann das Verfahren wieder von Beginn an initiiert, oder eine Simulation von Produktionsvarianten neu gestartet werden.

Das Verfahren umfasst demnach einen Zwischenschritt, in dem geprüft wird, ob die ermittelten Produktionsvarianten vorgegebenen Anforderungen entsprechen. Die Anforderungen können von dem Betreiber der Produktionsanlage oder dem Hersteller des Produkts definiert werden. Die Anforderungen können insbesondere in Form des Kenngrößenbereichs angegeben sein. Genügen die ermittelten Produktionsvarianten den vorgegebenen Anforderungen nicht, z.B. da die Produktionskenngrößen der ermittelten Produktionsvarianten nicht innerhalb des Kenngrößenbereichs liegen, können mindestens einer der oben genannten Schritte ausgeführt werden.

Veränderte Produktionskenngrößen können sich insbesondere auf zeitlich veränderliche Produktionskenngrößen beziehen. Nach dem Berechnen der Kennzahlen und dem Prüfen auf die vorgegebenen Anforderungen kann eine Rechenzeit verstrichen sein, und die Produktionskenngrößen können sich verändert haben. Ferner können Kriterien für das Ermitteln der Produktionsvarianten verändert werden, oder die Produktionskenngrößen anders gewichtet werden.

Alternativ oder zusätzlich kann der vorgegebene Kenngrößenbereich geändert, vorzugsweise erweitert, werden. Die weiteren Produktionsvarianten können sich auf Produktionsvarianten beziehen, die auf diese Weise nun ermittelt werden können.

Gemäß einer weiteren Ausführungsform umfasst das Verfahren ferner den Schritt:

- Zuweisen von mehreren Modulkenngrößen zu jedem der mehreren Produktionsmodule.

Die mehreren Modulkenngrößen umfassen eine Leistungsaufnahme des jeweiligen Produktionsmoduls.

Die Produktionskenngrößen jeder der Produktionsvarianten hängen von den Modulkenngrößen der zugeordneten Produktionsmodule ab.

Zusätzlich zu der Leistungsaufnahme der zugeordneten Produktionsmodule können weitere Modulkenngrößen die Produktionskenngrößen der Produktionsvariante bestimmen. Beispiele für Modulkenngrößen sind eine Betriebsdauer, Laufzeit, lokaler Durchsatz und eine Herstellmenge. Die Modulkenngrößen können von dem Hersteller der jeweiligen Produktionsmodule angegeben, während des Betriebs der Produktionsanlage gemessen oder von dem Betreiber der Produktionsanlage eingestellt sein. Die Modulkenngrößen können statistisch erfasst oder auf einer Datenbank gespeichert sein. Insbesondere können die Modulkenngrößen zumindest teilweise lokal an dem Produktionsmodul bereitgestellt und/oder gespeichert sein.

Gemäß einer weiteren Ausführungsform werden die Produktionskenngrößen jeder der mehreren Produktionsvarianten für die Berechnung der zugewiesenen Kennzahl einzeln gewichtet.

Beispielsweise werden die Produktionskenngrößen jeweils mit einem zugehörigen Gewichtungsfaktor multipliziert, wobei alle Gewichtungsfaktoren einen Wert zwischen 0 und 1,0 annehmen. Vorzugsweise ist eine Summe aller Gewichtungsfaktoren 1,0.

Gemäß einer weiteren Ausführungsform erfasst mindestens ein Teil der Produktionsmodule eigene Modulkenngrößen und stellt diese einer zentralen Recheneinheit bereit, die die mehreren Produktionsvarianten bestimmt und die Kennzahl für jede der mehreren Produktionsvarianten berechnet.

Dementsprechend kann eine lokale Rechen- und/oder Speicherkapazität bei den Produktionsmodulen ausgenutzt werden, um eine Arbeitsbelastung an der zentralen Recheneinheit zu reduzieren. Dadurch kann die Herstellung des Produkts beschleunigt werden.

Gemäß einer weiteren Ausführungsform wird das vorgeschlagene Verfahren periodisch mit einem Taktzyklus wiederholt. Die mehreren Produktionsvarianten werden in jedem Taktzyklus auf einer Datenbank gespeichert. Die Kennzahl der ausgewählten Produktionsvariante wird mit den Kennzahlen der Produktionsvarianten der vorhergehenden Taktzyklen auf der Datenbank verglichen. Es wird diejenige Produktionsvariante zum Herstellen des Produkts ausgewählt, die eine höhere Kennzahl aufweist.

Der Taktzyklus kann sich auf eine Periode einer Bewegungswiederholung des jeweiligen Produktionsmoduls, auf eine Laufzeit des vorgeschlagenen Verfahrens und/oder auf eine Herstellungsdauer des Produkts beziehen. Ferner kann der Taktzyklus eine Simulations- oder Planungszeitdauer betreffen.

Vorzugsweise wird eine Datenbank zum Speichern von ermittelten Produktionsvarianten bereitgestellt. Vorzugsweise werden Produktionsvarianten, die ermittelt werden, mit den Produktionsvarianten, welche auf der Datenbank gespeichert sind, abgeglichen. Falls die weiteren Produktionsvarianten nicht auf der Datenbank vorhanden sind, können sie auf der Datenbank gespeichert werden.

Gemäß einem zweiten Aspekt wird ein Automatisierungssystem mit mehreren Produktionsmodulen zum Herstellen eines Produkts vorgeschlagen. Das Automatisierungssystem ist zum Ausführen des oben vorgeschlagenen Verfahrens geeignet.

Die jeweilige Einheit, zum Beispiel die Recheneinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1     zeigt eine erste Ausführungsform eines Verfahrens zum Herstellen eines Produkts; und

Fig. 2     zeigt schematisch ein Automatisierungssystem mit mehreren Produktionsmodulen.

In den Figuren sind gleiche oder funktionsgleiche Elemente mit denselben Bezugszeichen versehen worden, sofern nichts anderes angegeben ist.

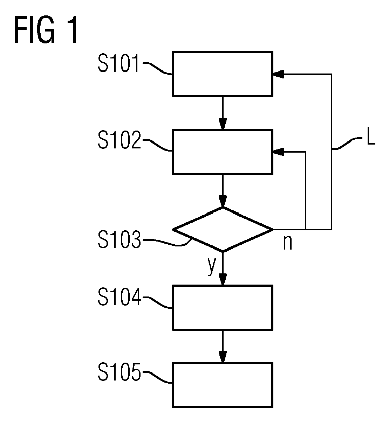

Fig. 1 zeigt eine erste Ausführungsform eines Verfahrens zum Herstellen eines Produkts.

Im Vorfeld des in Fig. 1 dargestellten Herstellungsverfahrens wird eine Produktionsanlage zum Herstellen des Produkts bereitgestellt. Bei dem Produkt kann es sich um ein Fahrzeug oder ein Elektrogerät handeln. Die Produktionsanlage weist eine Mehrzahl von Produktionsmodulen auf, die eine oder mehrere für die Herstellung des Produkts relevante Aktionen, z.B. Löten, Schweißen, Transportieren oder Bohren des Werkmaterials oder Werkstücks, ausführen können. Einige der Produktionsmodule sind in der Lage, mehrere verschiedene Aktionen durchzuführen. So stehen z.B. mehrere Roboterarme für die Herstellung des Fahrzeugs zur Verfügung, die das Werkmaterial wahlweise schweißen und transportieren können.

Im ersten Schritt S101 werden auf der Grundlage der zugewiesenen Produktionskenngrößen die Produktionsvarianten ermittelt, d.h. verschiedene Möglichkeiten zum Betreiben der Produktionsanlage für die Herstellung des Produkts identifiziert. Im konkreten Beispiel der Herstellung eines Elektrogerätes kann jede der ermittelten Produktionsvarianten vorgeben, wie und wann die Transportmittel, Löt- und Schweißgeräte und Materialversorgung der Produktionsanlage einzeln gesteuert und betrieben werden sollen. Die ermittelten Produktionsvarianten unterscheiden sich dabei in der Zusammensetzung, der Betriebsreihenfolge und/oder der Einsatzzeit dieser Produktionsmodule sowie der Verknüpfung dieser Produktionsmodule miteinander. Ferner bestimmen die Produktionsvarianten die Herstellungszeit, -dauer und -menge des Produkts.

Beim Ermitteln der Produktionsvarianten können zudem Anforderungen an die Produktionsvarianten definiert sein. Falls keine Produktionsvarianten ermittelt werden konnten, die diese Anforderungen erfüllen, da beispielsweise keine geeigneten Produktionsmodule verfügbar sind, können die Produktionskenngrößen modifiziert oder das Ermitteln zu einem späteren Zeitpunkt ausgeführt werden. Bei einer Simulation kann die gesamte Simulation neu gestartet werden.

Im nächsten Schritt S102 werden zunächst eine oder mehrere Produktionskenngrößen, insbesondere ein Energieverbrauch, eine Verfügbarkeit, eine Leistungsfähigkeit, eine Produktionsqualität und ein Durchsatz, jeder der Produktionsvarianten zugewiesen. Die Produktionskenngrößen werden basierend auf den Modulkenngrößen der zugeordneten Produktionsmodule bestimmt. Die Modulkenngrößen sind teils vom Hersteller des jeweiligen Produktionsmoduls bereitgestellt und teils vom Betreiber der Produktionsanlage gemessen. Hierzu können einige der Produktionsmodule mit einem Sensor oder Messgerät ausgestattet sein, die eine oder mehrere Modulkenngrößen erfassen können.

Alternativ oder zusätzlich können zumindest einige der Produktionsmodule eine lokale Speichereinheit aufweisen, auf der die Modulkenngrößen gespeichert sind. Ferner sind die Produktionskenngrößen der Produktionsvarianten auf einer zentralen Datenbank der Produktionsanlage gespeichert und abrufbar.

Die Produktionskenngrößen werden gemäß einem einheitlichen Modell, z.B. der Norm ISO/WD 22400-2, mathematisch beschrieben, wie im Folgenden beispielhaft gezeigt ist.

Die Verfügbarkeit A der i-ten Produktionsvariante $V_i$ wird gemäß folgender Formel berechnet:

$$A(V_i) = \sum_{j=1}^{m} TOT_{R_j}(V_i) \cdot \left( \sum_{j=1}^{m} RT_{R_j}(V_i) \right)^{-1}$$

wobei $R_j$ das j-te Produktionsmodul symbolisiert, TOT eine Gesamtbetriebsdauer und RT die Laufzeit ist.

Die Leistungsfähigkeit F der i-ten Produktionsvariante $V_i$ wird wie folgt berechnet:

$$F(V_i) = \sum_{j=1}^{m} AO_{R_j}(V_i) \cdot \left( \sum_{j=1}^{m} TO_{R_j}(V_i) \right)^{-1}$$

wobei AO ein tatsächlicher Durchsatz und TO ein theoretischer (maximal möglicher) Durchsatz ist.

Die Produktionsqualität Q der i-ten Produktionsvariante $V_i$ wird gemäß folgender Formel berechnet:

$$Q(V_i) = \sum_{j=1}^{m} GQ_{R_j}(V_i) \cdot \left( \sum_{j=1}^{m} AO_{R_j}(V_i) \right)^{-1}$$

wobei GQ eine Menge des hergestellten Produkts ist, das vorgegebene Qualitätsanforderungen erfüllt.

Der Durchsatz T der i-ten Produktionsvariante $V_i$ wird wie folgt berechnet:

$$T(V_i) = AO(V_i) \cdot (TT(V_i))^{-1}$$

wobei TT eine Zeitspanne ist, innerhalb welcher die Berechnung erfolgt.

Ein Energieverbrauch E der i-ten Produktionsvariante $V_i$ ist nicht per Norm definiert und kann wie folgt aus der Leistungsaufnahme P berechnet werden:

$$E(V_i) = \sum_{j=1}^{m} \int_{t=0}^{TT} P_{R_j}(V_i) dt \cdot (T(V_i))^{-1}$$

Ein normierter Energieverbrauch $E_{norm}$ wird dann folgendermaßen berechnet:

$$E_{norm}(V_i) = E(V_i) \cdot (max(E(V_i)))^{-1}$$

Falls eine oder mehrere Produktionsvarianten ermittelt werden konnten, wird in einem nächsten Schritt S103 für jede dieser Produktionsvarianten geprüft, ob die Produktionskenngrößen in einem vorgegebenen Kenngrößenbereich liegen. Sind die Bedingungen nicht erfüllt, werden die Produktionskenngrößen neu zugewiesen. Alternativ können neue Produktionsvarianten ermittelt werden, d.h. das Verfahren neu gestartet werden, wie durch den Pfeil L in Fig. 1 symbolisiert ist.

Falls eine oder mehrere Produktionsvarianten die Bedingungen im Schritt S103 erfüllen, wird in einem nächsten Schritt S104 mindestens eine Kennzahl in Abhängigkeit von den Produktionskenngrößen berechnet. Beispielsweise wird eine abgestimmte Kennzahl (balanced performance indicator, BPI) berechnet. Der BPI kann insbesondere wie folgt berechnet werden:

$$BPI(V_i) = w_A \cdot A(V_i) + w_F \cdot F(V_i) + w_Q \cdot Q(V_i) + w_E \cdot (1 - E(V_i))$$

wobei $w_A$, $w_F$, $w_Q$ und $w_E$ die jeweiligen Gewichtungsfaktoren sind und wie folgt normiert sind:

$$w_A + w_F + w_Q + w_E = 1$$

Die Größen A, Q, F und E sind ebenfalls auf 1 normiert, d.h. sie nehmen einen Wert zwischen 0 und 1,0 an. Folglich kann der BPI einen Wert zwischen 0 und 1,0 annehmen.

In einem letzten Schritt S105 wird eine Produktionsvariante zum Herstellen des Produkts ausgewählt. Dabei werden die Kennzahlen der ermittelten Produktionsvarianten miteinander verglichen und diejenige Produktionsvariante mit der höchsten Kennzahl zum Herstellen des Produkts ausgewählt. Alternativ oder zusätzlich können die ermittelten Produktionsvarianten oder die ausgewählte Produktionsvariante mit den Produktionsvarianten, die auf der Datenbank der Produktionsanlage gespeichert sind, verglichen werden. Daraus kann diejenige Produktionsvariante mit der höchsten Kennzahl zum Ausführen der Herstellung des Produkts ausgewählt werden.

Alternativ kann, je nach mathematischem Kontext bei der Berechnung der Kennzahl, diejenige Produktionsvariante mit der niedrigsten Kennzahl oder mit einer Kennzahl, die am nächsten einem vorgegebenen Wert liegt, ausgewählt werden.

In einem darauffolgenden Schritt, der in Fig. 1 nicht dargestellt ist, kann die Herstellung des Produkts gemäß der ausgewählten Produktionsschritt ausgeführt werden. Die Herstellung des Produkts erfolgt den Erfordernissen beim Auswählen des Schritts S105 entsprechend. Insbesondere wird gemäß dem Verfahren der Energieverbrauch der Produktionsvariante berücksichtigt. Inwieweit eine Energieeffizienz bei der Herstellung des Produkts eine Rolle spielt, kann beispielsweise mit Hilfe der Gewichtungsfaktoren beeinflusst werden.

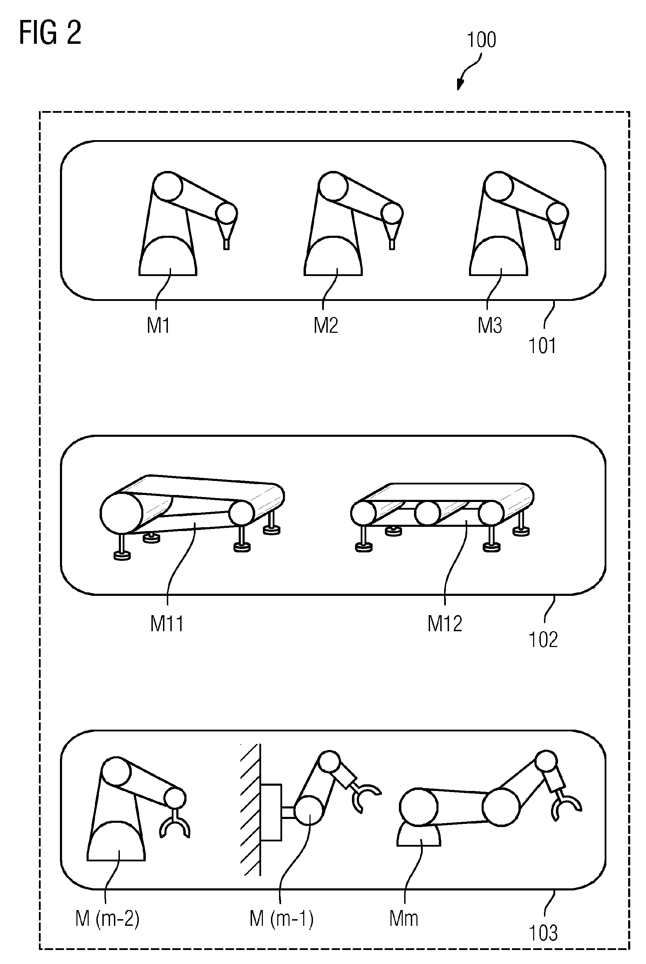

Fig. 2 zeigt schematisch ein Automatisierungssystem 100, das mehrere Produktionsmodule M1 - Mm umfasst.

Die Produktionsmodule M1 - Mm des Automatisierungssystems 100 sind automatisierte Maschinen oder Geräte, die ohne ein menschliches Zutun arbeiten oder menschliche Anweisungen wiederholt ausführen. Die Produktionsmodule M1 - Mm können nach verschiedenen Kriterien in Subgruppen unterteilt werden. Fig. 2 zeigt drei Subgruppen 101 - 103, wobei eine erste Subgruppe 101 zum Schweißen oder Löten von Werkstücken, eine zweite Subgruppe 102 zum Transport von Werkstücken oder Materialien auf einem Fließband, und eine dritte Subgruppe 103 zum gezielten Anbringen von Werkstücken und Materialien geeignet sind. Die Produktionsanlage 100 kann weitere Produktionsmodule und Subgruppen umfassen, die in Fig. 2 nicht gezeigt sind.

Von jedem der Produktionsmodule M1 - Mm werden die Leistungsaufnahme (oder Energieverbrauch), die Verfügbarkeit, die Leistungsfähigkeit, die Produktionsqualität und der Durchsatz als die Produktionskenngrößen abgefragt. Dabei können die Produktionskenngrößen zumindest teilweise auf einer zentralen Datenbank oder lokal in den Speichern der Produktionsmodule M1 - Mm gespeichert und abrufbar sein. Eine zentrale Recheneinheit und/oder lokale Recheneinheiten der Produktionsmodule M1 - Mm der Produktionsanlage erfassen die Produktionskenngrößen und ordnet sie den jeweiligen Produktionsmodulen zu. Dann werden die Schritte S101 - S105 wie oben beschrieben ausgeführt.

Obwohl die vorliegende Erfindung anhand von Ausführungsbeispielen beschrieben wurde, ist sie vielfältig modifizierbar. Bei dem Produkt kann es sich auch um eine semi-fertige Ware, z.B. Teile eines Produkts, handeln. Die Kennzahl kann um weitere Produktionskenngrößen wie Laufzeit oder Kosten erweitert werden. Mindestens eine der Produktionskenngrößen (abgesehen von der Leistungsaufnahme/Energieverbrauch) kann vernachlässigbar sein. Das Ermitteln der Produktionsvarianten kann einzelne Herstellungsschritte betreffen anstatt den kompletten Herstellungsprozess des Produkts.

**Patentansprüche**

**1.** Verfahren zum Herstellen eines Produkts unter Verwendung mindestens eines von mehreren Produktionsmodulen (M1 - Mm), mit:

Ermitteln (S101) von mehreren Produktionsvarianten zum Herstellen des Produkts unter Verwendung von mindestens einem Produktionsmodul der mehreren Produktionsmodule (M1 - Mm), wobei jede der mehreren Produktionsvarianten das Betreiben mindestens eines Produktionsmoduls der mehreren Produktionsmodule umfasst, und das mindestens eine Produktionsmodul der jeweiligen Produktionsvariante zugeordnet wird;

Zuweisen (S102) von mehreren Produktionskenngrößen zu jeder der Produktionsvarianten in Abhängigkeit von einer jeweiligen Leistungsaufnahme des mindestens einen zugeordneten Produktionsmoduls;

Berechnen (S104) einer Kennzahl für jede der mehreren Produktionsvarianten in Abhängigkeit von den Produktionskenngrößen;

Auswählen (S105) einer Produktionsvariante zum Herstellen des Produkts aus den mehreren Produktionsvarianten in Abhängigkeit von der berechneten Kennzahl; und

Herstellen des Produkts gemäß der ausgewählten Produktionsvariante, indem das mindestens eine zugeordnete Produktionsmodul der ausgewählten Produktionsvariante für die Herstellung des Produkts bereitgestellt und in einer durch die ausgewählte Produktionsvariante definierten Weise betrieben wird.

2. Verfahren nach Anspruch 1, ferner umfassend:

Erfassen der Leistungsaufnahme des mindestens einen zugeordneten Produktionsmoduls;

Berechnen eines Integrals über die Leistungsaufnahme des mindestens einen zugeordneten Produktionsmoduls in einem vorgegebenen Zeitintervall;

Berechnen eines Energieverbrauchs jeder der Produktionsvarianten als eine Summe der Integrale der Leistungsaufnahmen des mindestens einen zugeordneten Produktionsmoduls; und

Berechnen einer Produktionsenergiemenge als ein Quotient des Energieverbrauchs durch einen Durchsatz der jeweiligen Produktionsvariante, wobei der Durchsatz eine Stückzahl des hergestellten Produkts pro Zeiteinheit ist,

wobei die Kennzahl jeder der mehreren Produktionsvarianten von der jeweiligen Produktionsenergiemenge abhängig ist.

3. Verfahren nach Anspruch 2, ferner umfassend:

Vergleichen der Produktionsenergiemengen der mehreren Produktionsvarianten miteinander;

Bestimmen einer maximalen Produktionsenergiemenge der mehreren Produktionsvarianten; und

Berechnen einer normierten Produktionsenergiemenge als ein Quotient der Produktionsenergiemenge durch die maximale Produktionsenergiemenge,

wobei die Kennzahl jeder der mehreren Produktionsvarianten von der normierten Produktionsenergiemenge abhängig ist.

4. Verfahren nach einem der vorhergehenden Ansprüche, wobei
die Produktionskenngrößen jeder der mehreren Produktionsvarianten einen Energieverbrauch der Produktionsvariante umfassen.

5. Verfahren nach einem der vorhergehenden Ansprüche, wobei
die Leistungsaufnahme jedes der mehreren Produktionsmodule (M1 - Mm) zeitlich veränderlich ist, und
die Kennzahl jeder der Produktionsvarianten abhängig von der zeitlich veränderlichen Leistungsaufnahme des mindestens einen zugeordneten Produktionsmoduls und dadurch zeitlich veränderlich ist.

6. Verfahren nach einem der vorhergehenden Ansprüche, wobei
die Produktionskenngrößen eine Verfügbarkeit, einer Leistungsfähigkeit, einer Produktionsqualität und/oder einem Durchsatz der jeweiligen Produktionsvariante umfassen.

7. Verfahren nach einem der vorhergehenden Ansprüche, wobei
die mehreren Produktionsvarianten sich in einer Produktionszeit, Arbeitszeit, Reihenfolge, Zusammensetzung und/oder einem Betriebsparameter des mindestens einen zugeordneten Produktionsmoduls unterscheiden.

8. Verfahren nach einem der vorhergehenden Ansprüche, ferner umfassend:

Vergleichen der Kennzahlen der mehreren Produktionsvarianten miteinander; und
Auswählen der Produktionsvariante mit der größten Kennzahl.

**9.** Verfahren nach einem der vorhergehenden Ansprüche, ferner umfassend mindestens einen der folgenden Schritte, falls die Produktionskenngrößen der mehreren Produktionsvarianten nicht in einem vorgegebenen Kenngrößenbereich liegen:

Zuweisen von veränderten Produktionskenngrößen zu den mehreren Produktionsvarianten;
Ermitteln von weiteren Produktionsvarianten; und
Ändern des vorgegebenen Kenngrößenbereichs.

**10.** Verfahren nach einem der vorhergehenden Ansprüche, ferner umfassend:

Zuweisen von mehreren Modulkenngrößen zu jedem der mehreren Produktionsmodule (M1 - Mm), wobei die mehreren Modulkenngrößen eine Leistungsaufnahme des jeweiligen Produktionsmoduls (M1 - Mm) umfassen, wobei die Produktionskenngrößen jeder der Produktionsvarianten von den Modulkenngrößen des mindestens einen zugeordneten Produktionsmoduls abhängig sind.

**11.** Verfahren nach einem der vorhergehenden Ansprüche, wobei
zum Berechnen der Kennzahl jeder der mehreren Produktionsvarianten die zugewiesenen Produktionskenngrößen einzeln gewichtet werden.

**12.** Verfahren nach einem der vorhergehenden Ansprüche, wobei
mindestens ein Teil der Produktionsmodule (M1 - Mm) eigene Modulkenngrößen erfasst und einer zentralen Recheneinheit bereitstellt; und
die zentrale Recheneinheit die mehreren Produktionsvarianten in Abhängigkeit von den Modulkenngrößen ermittelt und die Kennzahl für jede der mehreren Produktionsvarianten berechnet.

**13.** Verfahren zum Herstellen eines Produkts, wobei
das Verfahren nach einem der vorhergehenden Ansprüche periodisch mit einem Taktzyklus wiederholt wird;
die mehreren Produktionsvarianten sowie ihre Kennzahlen in jedem Taktzyklus auf einer Datenbank gespeichert werden;
die Kennzahl der ausgewählten Produktionsvariante mit den Kennzahlen der Produktionsvarianten der vorhergehenden Taktzyklen auf der Datenbank verglichen wird; und
diejenige Produktionsvariante zum Herstellen des Produkts ausgewählt wird, die eine höhere Kennzahl aufweist.

**14.** Automatisierungssystem mit mehreren Produktionsmodulen (M1 - Mm) zum Herstellen eines Produkts, eingerichtet zum Ausführen des Verfahrens nach einem der vorhergehenden Ansprüche.

FIG 1

S101

S102

L

S103

n

y

S104

S105

# FIG 2

**Europäisches Patentamt**
**European Patent Office**
**Office européen des brevets**

# EUROPÄISCHER RECHERCHENBERICHT

Nummer der Anmeldung

EP 16 16 9368

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2013 216799 A1 (SIEMENS AG [DE]) 26. Februar 2015 (2015-02-26) * das ganze Dokument * ----- | 1-14 | INV. G06Q10/06 |
| X | MITRA SUMIT ET AL: "Optimal production planning under time-sensitive electricity prices for continuous power-intensive processes", COMPUTERS & CHEMICAL ENGINEERING, Bd. 38, 5. März 2012 (2012-03-05), Seiten 171-184, XP028898350, ISSN: 0098-1354, DOI: 10.1016/J.COMPCHEMENG.2011.09.019 * das ganze Dokument * ----- | 1-14 | |
| X | US 2010/274377 A1 (KAUFMAN PHILIP JOHN [US] ET AL) 28. Oktober 2010 (2010-10-28) * Zusammenfassung; Ansprüche 1-26; Abbildungen 1-10 * * Absätze [0008], [0009], [0019] - [0045] * ----- | 1-14 | RECHERCHIERTE SACHGEBIETE (IPC) |
| X | DE 10 2011 122516 A1 (BOSCH GMBH ROBERT [DE]) 4. Juli 2013 (2013-07-04) * Zusammenfassung; Ansprüche 1-9; Abbildungen 1-17 * * Absätze [0047] - [0073] * ----- | 1-14 | G06Q |

Der vorliegende Recherchenbericht wurde für alle Patentansprüche erstellt

| Recherchenort | Abschlußdatum der Recherche | Prüfer |
|---|---|---|
| Den Haag | 4. Oktober 2016 | Streit, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 16 9368

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-10-2016

| Im Recherchenbericht angeführtes Patentdokument | Datum der Veröffentlichung | Mitglied(er) der Patentfamilie | Datum der Veröffentlichung |
|---|---|---|---|
| DE 102013216799 A1 | 26-02-2015 | DE 102013216799 A1<br>EP 3000004 A1<br>WO 2015024920 A1 | 26-02-2015<br>30-03-2016<br>26-02-2015 |
| US 2010274377 A1 | 28-10-2010 | AU 2010201614 A1<br>CA 2701315 A1<br>CN 101872443 A<br>EP 2261844 A1<br>US 2010274377 A1 | 11-11-2010<br>24-10-2010<br>27-10-2010<br>15-12-2010<br>28-10-2010 |
| DE 102011122516 A1 | 04-07-2013 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013216799 A1